(19) Europäisches Patentamt
European Patent Office
Office européen des brevets

(11) **EP 3 571 630 B1**

(12) **EUROPÄISCHE PATENTSCHRIFT**

(45) Veröffentlichungstag und Bekanntmachung des Hinweises auf die Patenterteilung:
**23.02.2022 Patentblatt 2022/08**

(21) Anmeldenummer: **18705070.3**

(22) Anmeldetag: **10.01.2018**

(51) Internationale Patentklassifikation (IPC):
***G06K 19/077*** (2006.01)

(52) Gemeinsame Patentklassifikation (CPC):
**G06K 19/07786**

(86) Internationale Anmeldenummer:
**PCT/DE2018/000006**

(87) Internationale Veröffentlichungsnummer:
**WO 2018/133894 (26.07.2018 Gazette 2018/30)**

(54) **UHF RFID-TRANSPONDER**

UHF RFID TRANSPONDER

TRANSPONDEUR RFID UHF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.01.2017 DE 102017000599**

(43) Veröffentlichungstag der Anmeldung:
**27.11.2019 Patentblatt 2019/48**

(73) Patentinhaber: KATHREIN Sachsen GmbH
**09241 Mühlau (DE)**

(72) Erfinder:
• **ILIEV, Stoyan**
**83026 Rosenheim (DE)**
• **BRUNNER, Thomas**
**83083 Riedering (DE)**

(74) Vertreter: **Findeisen Neumann Scheit Partnerschaft mbB**
**Pornitzstraße 1**
**09112 Chemnitz (DE)**

(56) Entgegenhaltungen:
**DE-A1-102009 033 559    US-A1- 2016 012 329**

EP 3 571 630 B1

**Beschreibung**

Die Erfindung betrifft einen UHF RFID-Transponder mit einer Antenne und einem RFID-Chip, wobei die Antenne eine erste Dipolstruktur, eine zweite Dipolstruktur, eine erste induktive Schleife, eine zweite induktive Schleife und einen Einspeisepunkt aufweist und wobei die erste Dipolstruktur und die zweite Dipolstruktur gefaltete Dipole sind und wobei die erste Dipolstruktur, die zweite Dipolstruktur, die erste induktive Schleife, die zweite induktive Schleife und der RFID-Chip elektrisch mit dem Einspeisepunkt verbunden sind und wobei die zweite induktive Schleife parallel zur ersten induktiven Schleife geschaltet ist.

UHF RFID Systeme bieten eine der besten Möglichkeiten um Gegenstände zu identifizieren und in Echtzeit zu verfolgen. Insbesondere eignet sich die passive UHF RFID Technologie durch ihre hohe Lesereichweite (größer 10 m) sehr gut für die Identifikation von Kraftfahrzeugen. Die gespeicherte Information (Identifikationsnummer) eines am Kraftfahrzeug angebrachten RFID-Transponders kann hiermit drahtlos und über große Entfernung ausgelesen werden. Damit kann beispielsweise eine automatisierte elektronische Maut auf der Autobahn realisiert werden, ohne dass bei der Identifikation ein Stillstand des Kraftfahrzeuges notwendig ist. Weiterhin kann beispielsweise auch die Registrierung am Eintritt eines Parkhauses kontaktlos durchgeführt werden. RFID-Transponder bestehen üblicherweise aus einem RFID-Chip und einer Antenne.

Für die Performance eines passiven UHF RFID Systems ist das richtige Anbringen des RFID Transponders am Kraftfahrzeug sehr wichtig. Ein geeigneter Platz hierfür ist die Innenseite der Windschutzscheibe des Kraftfahrzeuges. Zum einen ist der RFID-Transponder dabei vor Witterungseinflüssen geschützt, zum anderen ist eine Bedruckungen (z.B. Kennzeichennummer) des RFID-Transponders von außen lesbar. Problematisch ist allerdings, dass die Windschutzscheibe als Dielektrikum wirkt und der RFID-Transponder dadurch verstimmt wird. Durch die Anpassung der Impedanz der Antenne kann der RFID-Transponder auf die Windschutzscheibe abgestimmt werden. Da sich aber Windschutzscheiben von Hersteller zu Hersteller in ihren Glasmaterialen und insbesondere der Glasdicke unterscheiden, kann ein auf eine Windschutzscheibe angepasster RFID-Transponder selten für eine Windschutzscheibe eines anderen Herstellers oder Fahrzeugtyps verwendet werden. Bei der Abstimmung der Impedanz der Antenne kommt erschwerend hinzu, dass die Fertigungstoleranzen bei der Herstellung der Antennen bereits einen erheblichen Einfluss auf die Performance des UHF RFID Systems haben.

Der Zusammenhang zwischen Glaseigenschaften und Transponder-Performance ist bereits in der Druckschrift WO 00/73990 A1 erkannt worden, wobei auch angeregt wird, dass der RFID-Transponder auf die jeweilige Scheibe abgestimmt sein soll. Allerdings wird in der genannten Schrift nicht beschrieben, wie ein RFID-Transponder auf verschiedene Glasscheiben, die sich in ihrer Zusammensetzung und Glasdicke unterscheiden, abgestimmt werden kann.

Aus dem Stand der Technik sind beispielsweise aus EP 1 814 190 B1 Antennen für UHF RFID-Transponder bekannt, die einen Dipol oder gefalteten Dipol und eine hierzu parallel geschaltete induktive Schleife aufweisen. Die Einspeisepunkte des Dipols sind elektrisch mit der induktiven Schleife verbunden, wobei die elektrische Verbindung an einer dem Dipol zugewandten Seite der induktiven Schleife angeordnet ist. Die Impedanz derartiger Antennen weist einen Realteil und einen Imaginärteil auf, wobei der Imaginärteil von der induktiven Schleife erzeugt wird. Die komplexe Konjugation dieser Impedanz sollte zur Impedanz des RFID-Chips angepasst sein. Nachteilig ist, dass bei derartigen Antennenstrukturen die mit dem Herstellungsverfahren verbundenen Toleranzen zu Abweichungen in der Sollgeometrie der Dipol- und Schleifendimensionen führen und sich damit negativ auf das Abstimmen der Impedanz der Antenne auf die Impedanz des RFID-Chips auswirken. Der Einfluss dieser Herstellungstoleranzen ist bei einem auf einer Glasscheibe angebrachten RFID-Transponder verstärkt zu beobachten.

Die DE 10 2009 033 559 A1 offenbart ein Kennzeichen eines Fahrzeuges. In dem metallischen Kennzeichen ist ein Schlitzantenne vorgesehen, die elektrisch mit einem RFID-Chip verbunden ist.

Bei dem in der US 2016/012329 A1 beschriebenen UHF RFID-Transponder weist die Antenne eine erste Dipolstruktur, eine zweite Dipolstruktur, eine erste induktive Schleife, eine zweite induktive Schleife und einen Einspeisepunkt auf, Die erste Dipolstruktur und die zweite Dipolstruktur sind gefaltete Dipole, wobei die beiden Dipolstrukturen, die erste induktive Schleife, die zweite induktive Schleife und der RFID-Chip elektrisch mit dem Einspeisepunkt verbunden sind und die zweite induktive Schleife parallel zur ersten induktiven Schleife geschaltet ist.

Aufgabe der Erfindung ist es, einen RFID-Transponder zu erschaffen, der unabhängiger von den geometrischen Toleranzen bei der Herstellung der Antenne abstimmbar ist. Insbesondere soll dieser RFID-Transponder damit zum Anbringen an eine Glasscheibe geeignet sein, wobei die Impedanz der Antenne unabhängiger von der Dicke und Materialzusammensetzung des Glases auf die Impedanz des RFID-Chips abstimmbar ist.

Diese Aufgabe wird dadurch gelöst, dass die als gefaltete Dipole ausgestalteten Dipolstrukturen jeweils durch einen parallel zu einer langen Seite der Antenne ausgerichteten Schlitz ausgebildet sind und dass diese Schlitze gebogene Enden aufweisen und dass die gebogenen Enden der ersten Dipolstruktur und die gebogenen Enden der zweiten Dipolstruktur zueinander gewandt sind.

Aufgrund des kapazitiven Charakters der Impedanz des RFID-Chips, ist die Impedanz der Antenne immer induktiv, weswegen eine typische Antenne mit einer induktiven Schleife ausgebildet ist, die einen induktiven Teil der Impedanz der Antenne erzeugt. Die Induktivität einer runden Schleife mir Radius *a* und Dicke *l* berechnet sich aus

$$L = \mu \frac{\pi a^2}{l} \qquad (1)$$

Damit ist die Induktivität $L$ proportional zum Quadrat der Größe $a$, Abhängig vom Herstellungsverfahren der Antenne des RFID-Transponders besteht immer eine Toleranz bei den Abmaßen und damit auch für die Größe a. Bei den Herstellungsverfahren Ätzen oder Metalldampfen ist typischerweise mit Toleranzen von etwa 50 $\mu$m zu rechnen. Sofern die Antenne nur mit einer induktiven Schleife ausgerüstet ist, ergibt sich unter Berücksichtigung der Toleranz eine Induktivität von

$$L = \mu \frac{\pi(a \pm \Delta a)^2}{l} \qquad (2)$$

Da $\mu \frac{\pi}{l}$ eine Konstante ist, ist die Induktivität proportional zum Term $(a \pm \Delta a)^2 = a^2 \pm 2a\Delta a + \Delta a^2$, sodass beim Vergleich mit Gleichung (1) der durch die Toleranz verursachte Anteil der Induktivität proportional zu $(\pm 2a\Delta a + \Delta a^2)$ ist.

Um den durch die Toleranz verursachten Anteil zu minimieren ist die erfindungsgemäße Antenne mit zwei parallelen induktiven Schleifen ausgestattet. Die Induktivität $L_{ges}$ beider Schleifen ergibt sich aus

$$L_{ges} = \frac{L_1 L_2}{(L_1 + L_2)} \qquad (3)$$

wobei $L_1$ und $L_2$ die Induktivitäten der einzelnen Schleifen sind.

Damit die gleiche Induktivität einer Schleife mit Radius a bei zwei parallel geschalteten Schleifen erreicht wird, müssen diese beiden Schleifen einen Radius $a\sqrt{2}$ aufweisen.

Die Induktivität der parallel geschalteten Schleifen ist damit proportional zu

$$\frac{(a\sqrt{2} \pm \Delta a)^4}{2(a\sqrt{2} \pm \Delta a)^2} = \frac{(a\sqrt{2} \pm \Delta a)^2}{2} = a^2 \pm \sqrt{2}a\Delta a + \frac{\Delta a^2}{4} \qquad (4)$$

Der durch die Toleranz verursachte Anteil der Induktivität ist damit proportional zu $\left(\pm\sqrt{2}a\Delta a + \frac{\Delta a^2}{4}\right) = \Delta a(\pm\sqrt{2}a + \frac{\Delta a}{4}) \approx \Delta a(\pm\sqrt{2}a)$ und kleiner als der oben ermittelte Anteil $(\pm 2a\Delta a + \Delta a^2) = \Delta a(\pm 2a + \Delta a) \approx \Delta a(\pm 2a)$, weil $\Delta a$ viel kleiner als a ist (typischerweise liegt a in der Größenordnung von 15 mm und a bei etwa 50 $\mu$m).

Wird der erfindungsgemäße UHF RFID-Transponder auf einem Dielektrikum verwendet (z.B. einer Windschutzscheibe), ist dieser in der Folge unabhängiger von den Eigenschaften des Dielektrikums. Im Falle einer Windschutzscheibe ist damit die Impedanz der Antenne mit zwei induktiven Schleifen unabhängiger von der Dicke und Materialzusammensetzung des Glases der Windschutzscheibe auf die Impedanz des RFID-Chips abstimmbar. Weiterhin ist der UHF RFID-Transponder auch zum Anbringen auf einem Kunststoffträger geeignet.

Der Realteil der Impedanz der Antenne wird maßgeblich von der Dipolstruktur und der Imaginärteil der Impedanz der Antenne wird maßgeblich von den beiden Schleifen erzeugt.

In einer weiteren Ausgestaltung, ist die zweite induktive Schleife als eine Spiegelung an einer Spiegelebene zur ersten induktiven Schleife angeordnet, wobei die Spiegelebene den Einspeisepunkt schneidet und parallel zu einer Dipolachse der ersten Dipolstruktur ausgerichtet ist.

In einer Ausführung sind die erste und die zweite induktive Schleife in einer gemeinsamen Ebene angeordnet.

In einer Ausgestaltung ist die zweite Dipolstruktur als eine Spiegelung an einer Spiegelebene zur ersten Dipolstruktur angeordnet, wobei die Spiegelebene den Einspeisepunkt schneidet und parallel zu einer Dipolachse der ersten Dipolstruktur ausgerichtet ist.

Auch bei dieser Variante wird der Imaginärteil der Impedanz der Antenne maßgeblich von den beiden Schleifen erzeugt. Der Realteil der Impedanz der Antenne wird maßgeblich von den beiden Dipolstrukturen erzeugt. Ebenso wird auch mit dieser Anordnung der Einfluss von Abweichungen bei den Abmessungen der Antenne auf die Impedanz der Antenne verringert, wodurch sich der UHF RFID-Transponder damit für die Verwendung auf einem Dielektrikum eignet.

Eine Ausführung sieht vor, dass die Antenne mit einem subtraktiven Verfahren auf einem metallisch beschichteten Substrat geformt oder mit einem additiven Verfahren auf einem Substrat gebildet ist.

Weiterhin wird vorgeschlagen, dass der UHF RFID-Transponder ein Hologramm aufweist. Ein am UHF RFID-Transponder angebrachtes Hologramm kann einer erweiterten Sicherheit, beispielsweise gegen Produktfälschung, dienen.

In einer Ausgestaltung ist das Hologramm aus Kunststoff gebildet.

Nachfolgend werden Ausführungsbeispiele der Erfindung anhand der Zeichnungen erläutert. Es zeigen:

Fig. 1a Erfindungsgemäßer UHF RFID-Transponder in einer Aufsicht
Fig. 1b UHF RFID-Transponder gemäß Fig. 1a in räumlicher Darstellung
Fig. 2a Weitere Ausführungsvariante eines erfindungsgemäßen UHF RFID-Transponders in einer Aufsicht
Fig. 2b UHF RFID-Transponder gemäß Fig. 2a in räumlicher Darstellung

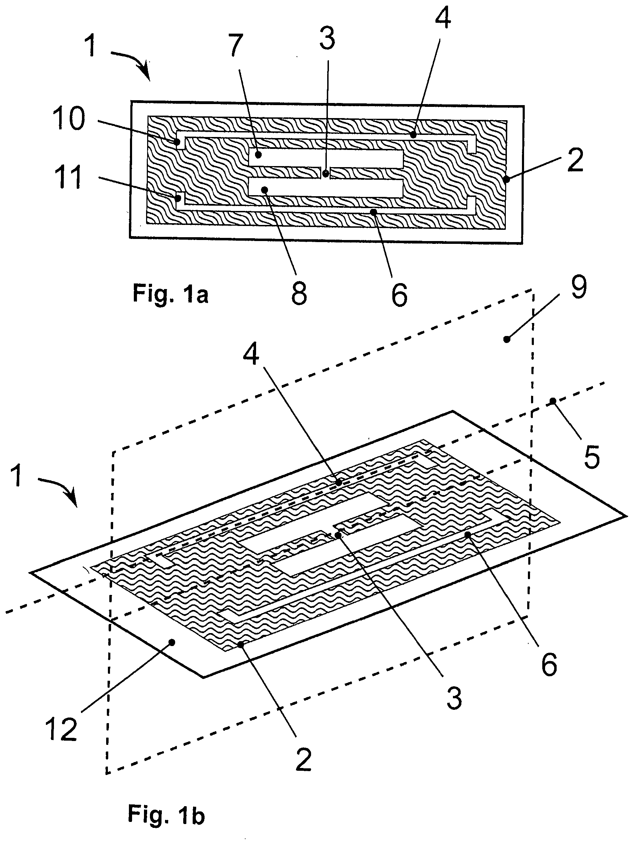

**Fig.1a** und **Fig. 1b** zeigen einen erfindungsgemäßen UHF RFID-Transponder 1, wobei dieser in **Fig. 1a** in einer Aufsicht und in **Fig. 1b** in einer räumlichen Darstellung gezeigt ist. Der UHF RFID-Transponder 1 weist eine Antenne 2 mit einem Einspeisepunkt 3 auf, wobei der Einspeisepunkt 3 mit einem RFID-Chip verbunden ist. Der RFID-Chip ist allerdings nicht dargestellt.

Die Antenne 2 ist mit einer ersten Dipolstruktur 4 mit einer Dipolachse 5, einer zweiten Dipolstruktur 6, einer ersten induktiven Schleife 7 und einer zweiten induktiven Schleife 8 ausgebildet, wobei diese Dipolstrukturen 4, 6 und induktiven Schleifen 7, 8 jeweils elektrisch mit dem Einspeisepunkt 3 verbunden sind. Die zweite induktive Schleife 8 ist an einer durch den Einspeisepunkt 3 verlaufenden und parallel zur Dipolachse 5 ausgerichteten Spiegelebene 9 gespiegelt zur ersten induktiven Schleife 7 angeordnet. Darüber hinaus liegen die erste und zweite induktive Schleife 7, 8 in einer gemeinsamen Ebene und der Einspeisepunkt 3 ist zwischen beiden Schleifen 7, 8 angeordnet. Eine platzsparende Ausführung sieht vor, dass die Schleifen eine rechteckige Form aufweisen, wobei die Schleifen beispielsweise als eine rechteckige Ausnehmung in einer metallischen Schicht ausgebildet sein können.

Die zweite Dipolstruktur 6 ist als Spiegelung an der Spiegelebene 9 zur ersten Dipolstruktur 4 angeordnet. Beide Dipolstrukturen 4, 6 sind als gefaltete Dipole ausgestaltet, die Schlitze aufweisen. Diese Schlitze weisen gebogene Enden 10, 11 auf, wobei die gebogenen Enden 10 der ersten Dipolstruktur 4 und die gebogenen Enden 11 der zweiten Dipolstruktur 6 zueinander gewandt sind. Grundsätzlich sind aber auch Schlitze ohne gebogene Enden 10, 11 oder aber gebogene Ende 10, 11 mit einer anderen als der dargestellten Ausrichtung denkbar.

Die Antenne 2 wurde mit einem subtraktiven Verfahren aus einer metallisch beschichteten Kunststofffolie gebildet, wobei aber die Ausbildung der Antenne 2 nicht auf dieses Verfahren beschränkt. Beispielsweise könnte die Antenne 2 auch durch ein Aufdampfen eines Metalls auf ein als Kunststofffolie ausgebildetes Substrat 12 unter der Verwendung von Schattenmasken aufgebaut sein. Ebenso ist die Verwendung einer Kunststofffolie nicht zwingend. Beispielsweise könnte als Substrat 12 auch Papier dienen. Als weiteres Beispiel für die Herstellung der Antenne 2 sei das Ausstanzen einer Metallfolie genannt. Sowohl die Metallfolie, als auch die Kunststofffolie oder das Papiersubstrat können mit einem Klebefilm ausgestattet sein, sodass der UHF RFID-Transponder 1 beispielsweise an einer Windschutzscheibe eines Kraftfahrzeuges befestigt werden kann.

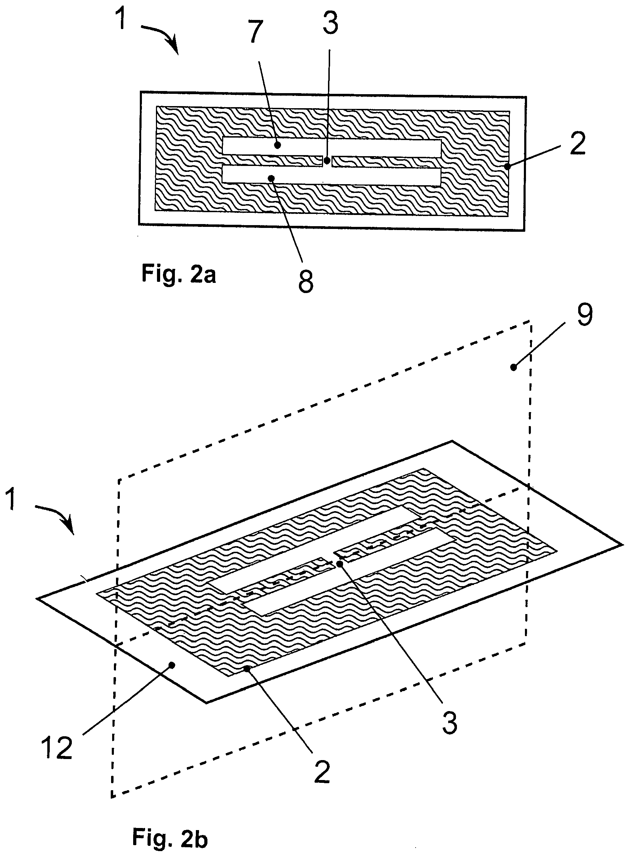

**Fig. 2a** zeigt eine weitere Ausführungsvariante des erfindungsgemäßen UHF RFID-Transponders 1 in einer Aufsicht. **Fig. 2b** zeigt den UHF RFID-Transponder 1 aus **Fig. 2a** in einer räumlichen Darstellung. Die Antenne 2 des UHF-RFID-Transponders 1 ist nur mit einer Dipolstruktur ausgebildet. Wie bereits bei der Ausführungsvariante gemäß **Fig. 1b** ist die zweite induktive Schleife 8 an einer durch den Einspeisepunkt 3 verlaufenden und parallel zur Dipolachse 5 ausgerichteten Spiegelebene 9 gespiegelt zur ersten induktiven Schleife 7 angeordnet. Beide Schleifen 7, 8 liegen in einer Ebene (Substratebene). Der Einspeisepunkt 3 ist zwischen den beiden Schleifen 7, 8 angeordnet.

In den Darstellungen zeigen die schwarzen Flächen die metallischen Bereiche der Antenne 2 des UHF RFID-Transponders 1.

Zur Erhöhung der Sicherheit, beispielsweise gegen Produktfälschung, kann der UHF RFID-Transponder ein Hologramm aufweisen. Dieses Hologramm kann beispielsweise an der Antenne oder auch in einem Bereich neben der Antenne angebracht sein. Ein derartiges Hologramm kann beispielsweise aus Kunststoff gebildet sein.

**Bezugszeichenliste**

1    UHF RFID-Transponder
2    Antenne

| 3 | Einspeisepunkt |
|---|---|
| 4 | Dipolstruktur |
| 5 | Dipolachse |
| 6 | Dipolstruktur |
| 7 | induktive Schleife |
| 8 | induktive Schleife |
| 9 | Spiegelebene |
| 10 | Ende |
| 11 | Ende |
| 12 | Substrat |

**Patentansprüche**

1. UHF RFID-Transponder mit einer Antenne und einem RFID-Chip, wobei die Antenne eine erste Dipolstruktur, eine zweite Dipolstruktur, eine erste induktive Schleife, eine zweite induktive Schleife und einen Einspeisepunkt aufweist und wobei die erste Dipolstruktur und die zweite Dipolstruktur gefaltete Dipole sind und wobei die erste Dipolstruktur, die zweite Dipolstruktur, die erste induktive Schleife, die zweite induktive Schleife und der RFID-Chip elektrisch mit dem Einspeisepunkt verbunden sind und wobei die zweite induktive Schleife parallel zur ersten induktiven Schleife geschaltet ist **dadurch gekennzeichnet,**
**dass** die als gefaltete Dipole ausgestalteten Dipolstrukturen (4, 6) jeweils durch einen parallel zu einer langen Seite der Antenne (2) ausgerichteten Schlitz ausgebildet sind und dass diese Schlitze gebogene Enden (10, 11) aufweisen und dass die gebogenen Enden (10) der ersten Dipolstruktur (4) und die gebogenen Enden (11) der zweiten Dipolstruktur (6) zueinander gewandt sind.

2. UHF RFID-Transponder nach Anspruch 1, **dadurch gekennzeichnet,**
**dass** die zweite induktive Schleife (8) als eine Spiegelung an einer Spiegelebene (9) zur ersten induktiven Schleife (7) angeordnet ist, wobei die Spiegelebene (9) den Einspeisepunkt (3) schneidet und parallel zu einer Dipolachse (5) der ersten Dipolstruktur (4) ausgerichtet ist.

3. UHF RFID-Transponder nach Anspruch 1, **dadurch gekennzeichnet,**
**dass** die erste und die zweite induktive Schleife (7, 8) in einer gemeinsamen Ebene angeordnet sind.

4. UHF RFID-Transponder nach Anspruch 1, **dadurch gekennzeichnet,**
**dass** die zweite Dipolstruktur (6) als eine Spiegelung an einer Spiegelebene (9) zur ersten Dipolstruktur (4) angeordnet ist, wobei die Spiegelebene (9) den Einspeisepunkt (3) schneidet und parallel zu einer Dipolachse (5) der ersten Dipolstruktur (4) ausgerichtet ist.

5. UHF RFID-Transponder nach Anspruch 1, **dadurch gekennzeichnet, dass** die Antenne (2) mit einem subtraktiven Verfahren auf einem metallisch beschichteten Substrat (12) geformt oder mit einem additiven Verfahren auf einem Substrat (12) gebildet ist.

6. UHF RFID-Transponder nach Anspruch 1, **dadurch gekennzeichnet, dass** der UHF RFID-Transponder ein Hologramm aufweist.

7. UHF RFID-Transponder nach Anspruch 6, **dadurch gekennzeichnet, dass** das Hologramm aus Kunststoff besteht.

**Claims**

1. UHF RFID transponder with an antenna and an RFID chip, wherein the antenna has a first dipole structure, a second dipole structure, a first inductive loop, a second inductive loop and a infeed point, wherein the first dipole structure and the second dipole structure are folded dipoles, and wherein the first dipole structure, the second dipole structure, the first inductive loop, the second inductive loop and the RFID chip are electrically connected to the infeed point, and wherein the second inductive loop is connected in parallel to the first inductive loop, **characterised in that** the dipole structures (4 and 6) designed as folded dipoles, each featuring a slit that is parallel to one long side of the antenna (2), and that these slits have curved ends (10 and 11) and that the curved ends (10) of the first dipole structure (4) and the curved ends (11) of the second dipole structure (6) are turned towards each other.

2. UHF RFID transponder according to claim 1, **characterised in that** the second inductive loop (8) is arranged as a mirror image of the first inductive loop (7) in a mirror plane (9), wherein the mirror plane (9) intersects the infeed point (3) and is parallel to a dipole axis (5) of the first dipole structure (4).

3. UHF RFID transponder according to claim 1, **characterised in that** the first and second inductive loops (7 and 8) are arranged in a common plane.

4. UHF RFID transponder according to claim 1, **characterised in that** the second dipole structure (6) is arranged as a mirror image of the first dipole structure (4) in a mirror plane (9), wherein the mirror plane (9) intersects the infeed point (3) and is parallel to a dipole axis (5) of the first dipole structure (4).

5. UHF RFID transponder according to claim 1, **characterised in that** the antenna (2) is produced using a subtractive process on a substrate (12) with a metallic coating or using an additive process on a substrate (12).

6. UHF RFID transponder according to 1, **characterised in that** the UHF RFID transponder features a hologram.

7. UHF RFID transponder according to claim 6, **characterised in that** the hologram is made of plastic.

## Revendications

1. Transpondeur RFID UHF avec une antenne et une puce RFID, l'antenne ayant une première structure de dipôle, une seconde structure de dipôle, une première boucle inductive, une seconde boucle inductive et un point d'alimentation, et la première structure de dipôle et la seconde structure de dipôle étant des dipôles repliés, et la première structure de dipôle, la seconde structure de dipôle, la première boucle inductive, la seconde boucle inductive et la puce RFID étant raccordées électriquement au point d'alimentation, et la seconde boucle inductive étant connectée parallèlement à la première boucle inductive, **caractérisé en ce que**
les structures de dipôle (4, 6) conçues comme des dipôles repliés sont chacune formées par une fente alignée parallèlement à un côté long de l'antenne (2) et **en ce que** ces fentes ont des extrémités coudées (10, 11) et **en ce que** les extrémités coudées (10) de la première structure de dipôle (4) et les extrémités coudées (11) de la seconde structure de dipôle (6) sont orientées l'une vers l'autre.

2. Transpondeur RFID UHF selon la revendication 1, **caractérisé en ce que**
la seconde boucle inductive (8) est disposée en miroir sur un plan de symétrie (9) par rapport à la première boucle inductive (7), le plan de symétrie (9) scindant le point d'alimentation (3) et étant orienté parallèlement à un axe de dipôle (5) de la première structure de dipôle (4).

3. Transpondeur RFID UHF selon la revendication 1, **caractérisé en ce que**
les première et seconde boucles inductives (7, 8) sont disposées dans un plan commun.

4. Transpondeur RFID UHF selon la revendication 1, **caractérisé en ce que**
la seconde structure de dipôle (6) est disposée en miroir sur un plan de symétrie (9) par rapport à la première structure de dipôle (4), le plan de symétrie (9) scindant le point d'alimentation (3) et étant orienté parallèlement à un axe de dipôle (5) de la première structure de dipôle (4).

5. Transpondeur RFID UHF selon la revendication 1, **caractérisé en ce que** l'antenne (2) est formée sur un substrat à revêtement métallique (12) par un procédé soustractif ou est formée sur un substrat (12) par un procédé additif.

6. Transpondeur RFID UHF selon la revendication 1, **caractérisé en ce que** le transpondeur RFID UHF comporte un hologramme.

7. Transpondeur RFID UHF selon la revendication 6, **caractérisé en ce que** l'hologramme est fait de plastique.

Fig. 1a

Fig. 1b

1

7    3

2

**Fig. 2a**

8

9

1

3

12

2

**Fig. 2b**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0073990 A1
- EP 1814190 B1
- DE 102009033559 A1
- US 2016012329 A1